# EUROPÄISCHE PATENTSCHRIFT

(11) **EP 0 398 003 B1**
(45) Veröffentlichungstag und Bekanntmachung des Hinweises auf die Patenterteilung: **13.07.1994**
(21) Anmeldenummer: 90106108.5
(22) Anmeldetag: 30.03.1990
(51) Int. Cl.: F16K 17/38, F16K 31/64

(54) **Vorrichtung zum Absperren von Leitungen von temperaturempfindlichen Medien, insbesondere von Gasleitungen**
Device for closing pipelines of temperature-sensitive media, especially gas pipelines
Dispositif pour fermer des conduits de milieux sensibles aux températures, en particulier de conduits de gaz

(30) Priorität: 17.05.1989 DE 3916100
(43) Veröffentlichungstag der Anmeldung: 22.11.1990
(73) Patentinhaber: Elektro- und Gas-Armaturen-Fabrik GmbH, D-58119 Hagen (DE)
(72) Erfinder: Gertler, Kurt, D-5800 Hagen-Hohenlimburg (DE); Gronnenberg, Werner, D-5800 Hagen-Hohenlimburg (DE); Bieber, Helmut, D-5800 Hagen 5 (DE)
(74) Vertreter: Patentanwälte Meinke, Dabringhaus und Partner

(56) Entgegenhaltungen:
- FR-A- 2 315 646
- US-A- 3 659 624
- US-A- 3 771 540
- US-A- 3 877 476
- US-A- 4 378 907
- GB-A 1 068 645
- DE-U 77 37 537

## Beschreibung

Die Erfindung richtet sich auf eine Vorrichtung zum Absperren von Leitungen von temperaturempfindlichen Medien gemäß Oberbegriff des Anspruches 1 bzw. 2 bzw. 7. Die im jeweiligen Oberbegriff aufgeführten Merkmale sind aus der GB-A 1068 645 bekannt.

Es gibt eine Reihe von Einsatzgebieten, bei denen es wünschenswert ist, wenn bei Überschreiten einer bestimmten Temperatur die jeweils betroffene Förderleitung sicher abgesperrt wird. Als Beispiel von vielen seien sogenannte automatische Gas-Sicherheitsventile genannt, bei denen etwa durch einen entstandenen Brand es notwendig wird, diese Leitungen bei Überschreiten einer Temperatur von beispielsweise 70°C abzusperren, um ein Nachströmen von Gas zu verhindern, das entweder weiterbrennt oder sich dann entzünden könnte.

Es ist auch bekannt, temperaturbeeinflußbare Sperrelemente vorzusehen, wobei auf das DE-78 08 549-U1 oder US-A-3 862 641 oder DE-27 04 961-C2 hingewiesen werden kann, die federbelastete Absperrelemente mit Weichlötung innerhalb eines Ventilkörpers zeigen.

Zum Stand der Technik sei auch noch zusätzlich auf die DE-31 26 214-A1 bzw. US-A-4 457 327 hingewiesen, wobei insbesondere letztere einen sehr aufwendigen Steuerungsmechanismus eines entsprechenden Ventiles zeigt, während die DE-31 26 241-A1 eine Lösung zeigt, bei der ein temperaturempfindlicher Sperrbolzen durch Vorspannung über Federkraft abgeschert wird und das Hahnküken in Schließstellung von dieser Feder verdreht wird. Das Verdrehen des Hahnkükens über eine Kulissenfläche bei Freigabe mittels eines Schmelzlotes zeigt beispielsweise das DE-81 20 372-U1. Den Schließvorgang über eine wärmeempfindliche Bimetallfeder zu bewirken, zeigt das DE-86 22 317-U1.

Vermögen einige der bekannten Lösungen bereits zu befriedigenden Ergebnissen zu führen, so liegt ein Nachteil der bekannten Lösungen darin, daß Rotationsbewegungen im Falle des Schnellschlusses auch im Bereich der Dichtungen durchgeführt werden müssen, was nicht nur die Überwindung vergleichsweise hoher Dichtkräfte notwendig macht, sondern auch vergleichsweise langsam ist und zu Fehlfunktionen führen kann.

Gattungsbildend beschreibt die GB-A-1 068 645 ein Absperrventil, das in einer Art T-Rohrstück einen mit einem Thermolot befestigten, von einer Druckfeder beaufschlagten Schließkolben aufweist, der bei Erreichung der Thermolotverbindung, von der Druckfeder in Sperrstellung bewegt wird. Wenngleich dort angegeben ist, daß für eine gute Wärmeübertragung gesorgt sein soll, so besteht, wie auch bei anderen bekannten Lösungen, ein Nachteil der dort beschriebenen geschlossenen Bauweise darin, daß nicht immer gewährleistet ist, daß eine Auslösung möglichst rasch erfolgt.

Aufgabe der Erfindung ist die Weiterbildung einer gattungsgemäßen Vorrichtung, die gewährleistet, daß die Umgebungstemperatur möglichst ungehindert an die den Schließvorgang einleitenden temperaturempfindlichen Teile gelangt, so daß ein schnelles schlagartiges Schließen unter Aufrechterhaltung optimaler Dichtwirkung ermöglicht wird.

Diese Aufgabe wird gemäß der Erfindung durch die Merkmale der Ansprüche 1 bzw. 2 bzw. 7 gelöst.

Mit der Erfindung wird erreicht, daß das Absperrelement bei Aufgabe der Stützfunktion des Stützelementes schlagartig in Schließstellung durch die lineare Führung gebracht wird, so daß Fehlfunktionen ausgeschlossen werden können.

Durch das Vorsehen der Thermolotverbindung außerhalb des Ventilkörpers läßt sich eine direkte Beeinflussung durch die Umgebungstemperatur erreichen.

Mit dieser Gestaltung läßt sich erreichen, daß im Gefahrenfall in aller kürzester Zeit eine Auslösung erfolgt, da die Temperatur sehr schnell zum die Sperre freigebenden Thermolot geleitet werden kann.

Weitere vorteilhafte Ausgestaltungen der Erfindung ergeben sich aus den abhängigen Ansprüchen.

Die Erfindung ist nachstehend anhand der Zeichnung beispielsweise näher erläutert. Diese zeigt als Schnittdarstellungen in
- Fig. 1: ein erstes Ausführungsbeispiel der Vorrichtung mit geöffnetem Absperrelement,
- Fig. 2: das gleiche Ausführungsbeispiel mit geschlossenem Absperrelement,
- Fig. 3 und 4: ein weiteres Ausführungsbeispiel in geöffneter bzw. geschlossener Stellung des Ventiles,
- Fig. 5 und 6: wiederum ein weiteres Ausführungsbeispiel der Vorrichtung in geöffneter bzw. geschlossener Stellung des Ventiles,
- Fig. 7 bis 10: alternative Ausgestaltungen bimetallbetätigter Sperrelemente,
- Fig. 11 bis 14: alternative Ausgestaltungen der Ventilbereiche des Absperrelementes, die jedoch nicht Gegenstand der vorliegenden Erfindung sind,
- Fig. 15 bis 18: Ausführungsvarianten des Stützelementes,
- Fig. 19: eine Aufsicht auf ein Stützelement gemäß Fig. 15,
- Fig. 20 und 21: eine weitere Ventilausbildung in geöffneter und geschlossener Ventilstellung sowie in
- Fig. 22: eine weitere Ausbildung eines Ventiles in Öffnungstellung.

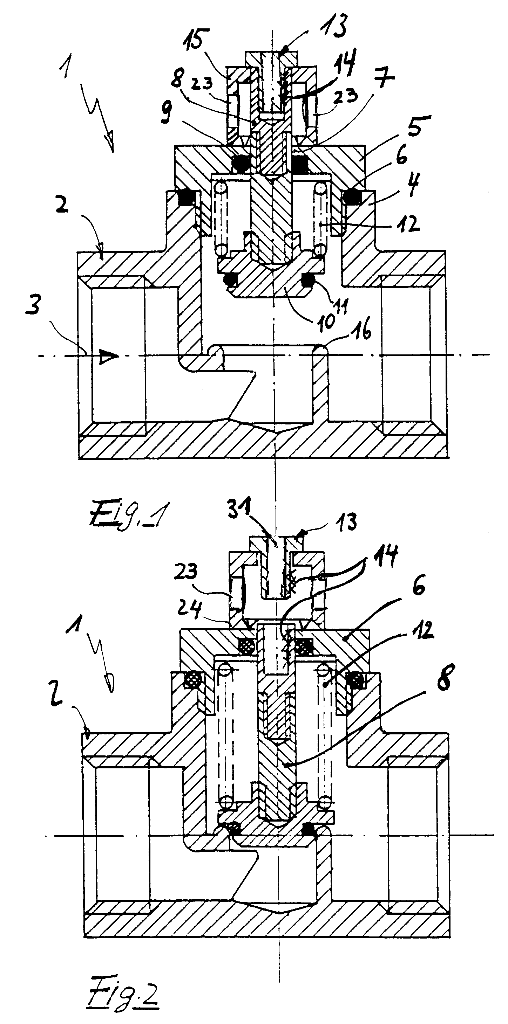

Zunächst sei die Vorrichtung gemäß den Fig. 1 und 2 beschrieben, wobei in den folgenden Beschreibungsteilen funktionsmäßig gleiche Teile mit gleichen Bezugszeichen mit hinzugefügten Strichen oder Kleinbuchstaben versehen sind.

Die allgemein mit 1 bezeichnete Vorrichtung besteht aus einem querschnittlich etwa T-förmigen Rohrstück 2, das in geöffneter Stellung von einem Medium gemäß Pfeil 3 durchströmt werden kann. An die nicht näher bezeichneten Anschlußstutzen werden ebenfalls nicht näher dargestellte Rohrleitungen angeschlossen. Senkrecht zur Strömungsrichtung gemäß Pfeil 3 ist ein Ventilrohrstück 4 als Bestandteil des T-Stückes 2 vorgesehen, welches von einer zentrisch durchbohrten Abdeckplatte 5 verschlossen ist, wobei zusätzlich eine Ringdichtung 6 zwischen Abschlußplatte 5 und Stutzen 4 angeordnet ist, die vorzugsweise aus einem hochwärmebeständigen Material besteht, wie alle weiteren Ringdichtungen auch, die weiter unten noch aufgeführt sind.

In der mit 7 bezeichneten zentrischen Bohrung der Abdeckplatte 5 ist ein hier zweiteilig gestalteter Ventilstößel 8 wiederum unter Einschluß einer Ringdichtung 9 geführt, in der Weise, daß er die Abdeckplatte 5 sowohl nach außen wie nach innen durchsetzt.

Im Inneren des Rohrstutzens 4 trägt der Ventilstößel 8 an seinem freien Ende einen Ventilteller (Absperrelement) 10 mit einer hochwärmebeständigen Elastomerringdichtung 11, wobei wirkmäßig zwischen dem Teller 10 und der Innenseite der Abdeckplatte 5 eine Druckfeder 12 vorgesehen ist.

An seiner Außenseite ist der Ventilstößel 8 mit einem Stützelement 13 ausgerüstet, das hier als im Inneren verlöteter Sperrstopfen dargestellt ist, die Thermolotschicht ist durch kleine Kreuze 14 lediglich angedeutet.

Das Stützelement 13 bzw. der entsprechend gestaltete Sperrstopfen oder die Thermolotmutter ruht mit seinem/ihrem Kopf auf einem ortsfesten Träger, der ausgebildet ist als Trägerhülse 15, die sich ihrerseits an der Außenfläche der Abdeckplatte 5 abstützt.

Die ortsfeste Trägerhülse 15 ist mit Durchbrechungen 23 in ihrer Mantelfläche ausgerüstet und weist auf ihrer Unterseite wiederum Durchbrechungen bildende Stützzähne 24 auf. Die Zähne 24 und die Durchbrechungen 23 ermöglichen einen schnelleren Eintritt der Umgebungstemperatur in den Innenbereich der Trägerhülse 15.

Dem Ventilteller 10 gegenüberliegend im Strömungsweg des zu fördernden Mediums ist auf den Teller 10 zugerichtet ein Ventilsitz 16 vorgesehen, in den ein Teilbereich des Tellers 10 eindringen kann, wobei sich ein weiterer Randbereich des Tellers auf der Oberkante nach wirkmäßiger Verpressung der hochwärmebeständigen Elastomerdichtung 11 abstützt. Der Dichtzustand ist dabei in Fig. 2 wiedergegeben, wobei sich folgende Wirkungsweise ergibt:

Zunächst wird die Abdeckplatte 5 mit gespannter Feder 12, Stützhülse 15 u. dgl. werkseitig montiert. Die so vormontierte mit Feder und Ventilteller 10 versehene Abdeckplatte 5 wird dann auf das entsprechend gestaltete T-Stück 2 aufgeschraubt, so daß sich die Konfiguration gemäß Fig. 1 ergibt. Wird nun im Einsatz eine vorbestimmbare, durch den Erweichungspunkt des Thermolotes 14 bestimmte Temperatur überschritten, weicht das Thermolot 14 auf und der Ventilteller 10 wird durch die Kraft der vorgespannten Feder 12 schlagartig nach unten auf den Teller 16 verschoben, derart, daß sich schlagartig eine Absperrung des Förderweges des Mediums, welches gemäß Pfeil 3 strömt, ergibt. Dabei reißt der Sperrstopfen 13 aus dem linear dichtend geführten Ventilstößel 8 heraus.

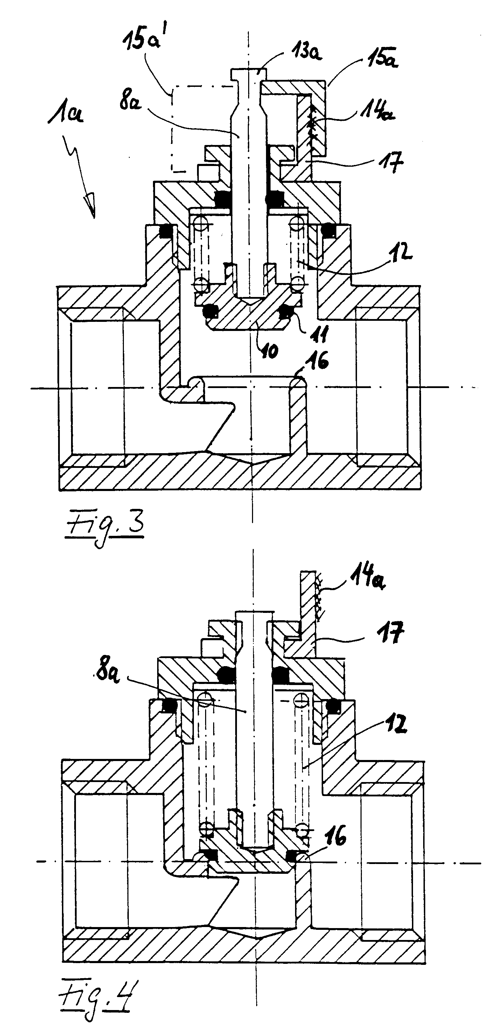

Die Vorrichtung 1a gemäß den Fig. 3 und 4 ist grundsätzlich gleich aufgebaut mit folgenden Unterschieden: Der Ventilstößel 8a ist hier einstückig gestaltet und weist einen außenseitigen oberen Kragen 13a als ein Stützelement auf, der sich in der Öffnungstellung an einen Stützhebel 15a abstützt, der mittels eines Thermolotes 14a an einem ortsfesten Träger 17 befestigt ist. Wird nun die vorbestimmte Umgebungstemperatur überschritten, erweicht das Thermolot 14a, der Stützhebel 15a wird von der Kraft der Feder 12 weggerissen, derart, daß der Ventilstößel 8a schlagartig den Ventilteller 10 auf den Ventilsitz 16 führt.

In Fig. 3 ist noch strichpunktiert im oberen Abbildungsbereich dargestellt, daß statt nur eines Stützhebels 15a auch wenigstens zwei gegenüberliegende derartige Stützhebel 15a und 15a' vorgesehen sein können.

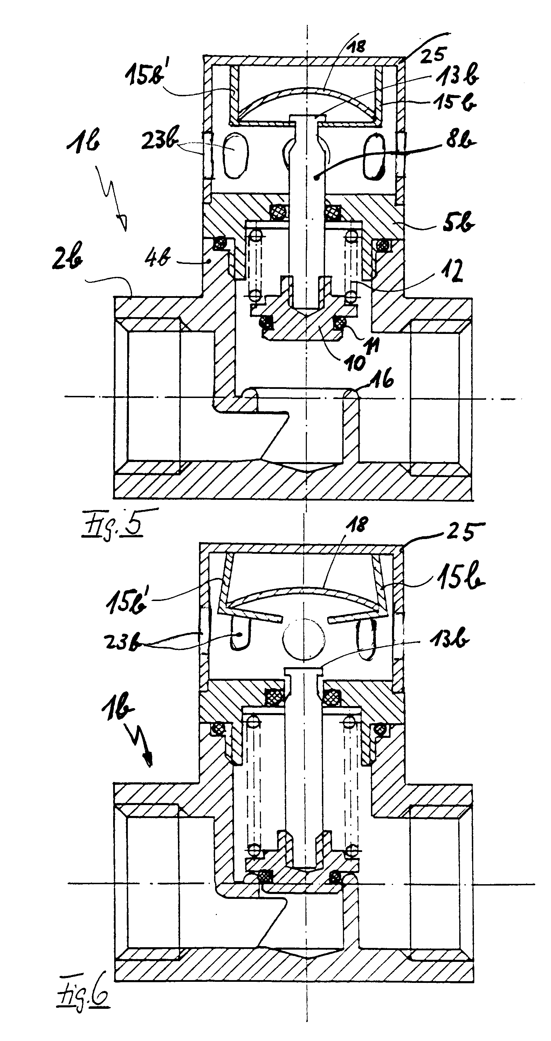

In den Fig. 5 und 6 ist ein weiteres Ausführungsbeispiel 1b dargestellt. Hier wird der Ventilstößel 8b in der Abschlußplatte 5b wiederum dichtend geführt, ansonsten ist die Ausbildung des Ventiltellers 10, des Ventilsitzes 16, der Feder 12 etc. gleich gestaltet wie bei den vorangegangenen Ausführungsbeispielen. Hier wird allerdings der Kragen 13b des Ventilstößels 8b von je zwei vereinfacht wiedergegebenen Stützhebeln 15b und 15b′ in der Öffnungstellung gehalten, wobei die Innenbereiche der Stützhebel von einem Bimetallbügel 18 beaufschlagt sind, wobei die Stützhebel in einem Gehäuse 25 gelagert sind, wobei das Gehäuse 25 mit Durchbrechungen bzw. Ausnehmungen 23b ausgerüstet ist, um auch hier wiederum einen schnelleren Zugang der Temperatur zu ermöglichen.

Die Wirkungsweise ist dabei die folgende: Bei Erwärmung streckt sich der Bimetallbügel 18 derart, daß er von der gewölbten, in Fig. 5 dargestellten Stellung in eine flachere in Fig. 6 dargestellte Stellung bewegt wird und dabei die Stützhebel 15b und 15b′ auseinanderspreizt. Nach Überschreiten eines gewissen Spreizwinkels wird der Kragen 13b freigegeben und das Ventil wird dann schlagartig geschlossen.

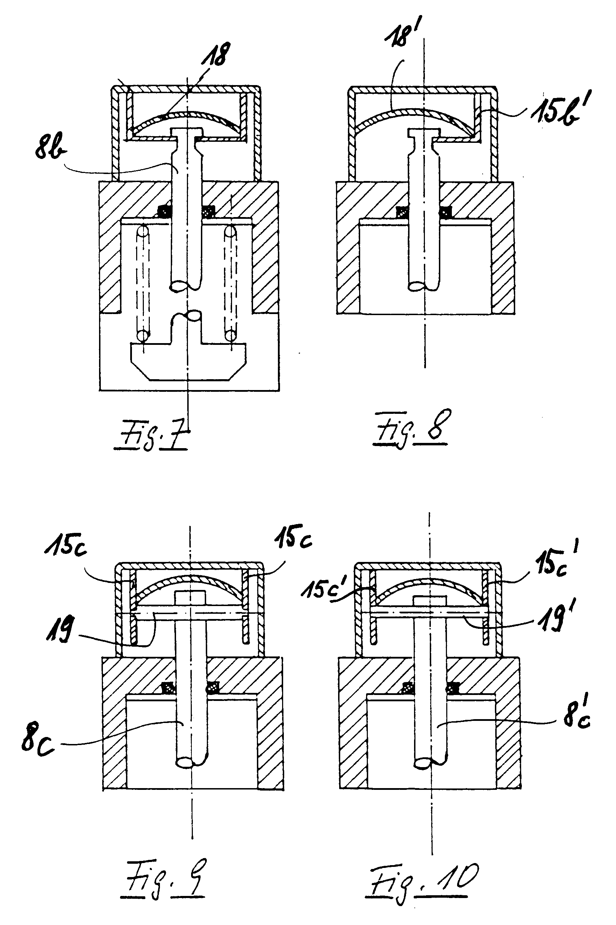

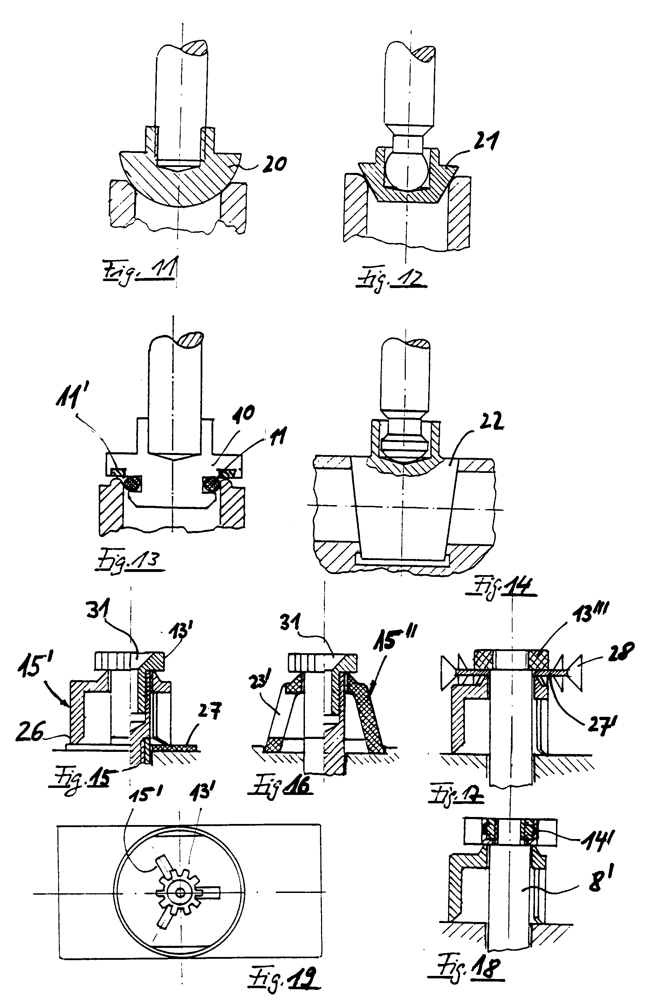

Die Fig. 7 bis 10 zeigen abgewandelte Beispiele, wie die Wirkungsweise der Bimetallfeder 18 zur Freigabe des Stößels 8b erreichbar ist. Dabei zeigt Fig. 7 den prinzipiellen Aufbau nach den Fig. 5 und 6. In Abwandlung dazu zeigt Fig. 8 die Ausgestaltung mit nur einem Stützhebel 15b′ und einer zugeordneten Bimetallfeder 18′.

In Fig. 9 sind die Stützhebel 15c als Lochplatten ausgestaltet, die die verjüngten Enden eines Haltestiftes 19 halten, der den Stößel 8c im Kopfbereich durchsetzt. Eine ähnliche, etwas anders gestaltete Art der Befestigung zeigt Fig. 10, hier sind die Löcher in den Lochplatten 15c' dem Durchmesser des Haltestiftes 19′ angepaßt.

In den Fig. 11 bis 14 sind schließlich mögliche Gestaltungen des Absperrorgans selbst dargestellt die jedoch nicht Bestandteil der vorliegenden Erfindung sind. Fig. 11 zeigt das Absperrorgan als Kugelventilsitz 20, Fig. 12 das Absperrorgan als Kegelventil 21, Fig. 13 stellt das Absperrorgan als Teller 10 mit hochwärmebeständiger Elastomerabdichtung 11 gemäß den vorangegangenen Beschreibungen dar. Eine Besonderheit besteht dabei bei der Dichtung gemäß Fig. 13 darin, daß der Elastomerabdichtung 11 eine Spezialscheibe, die mit dem Ventilsitz zusammenwirkt, aus Weichkupfer zugeordnet ist. Diese Scheibe trägt in Fig. 13 das Bezugszeichen 11′. Es hat sich gezeigt, daß bei längerem Aussetzen der Vorrichtung einer höheren Temperatur von über 500°C zwar die Elastomer-Ringdichtscheibe schmilzt und den Dichtsitz verklebt, gleichwohl scheinen sich Auflösungs- oder Porösitätserscheinungen am Ventilsitz zu ergeben, wegen der üblicherweise dort vorgesehenen Messinglegierung. Hier wirkt die Weichkupferscheibe in besonderer Weise dichtend entgegen, da sie bei diesen Temperaturen vergleichsweise weich wird und über die Restfederkraft der Schließfeder an den Sitz angepreßt und ggf. gemäß Sitzgestaltung verformt wird. Hier ist also eine Art Duo-Ventilteller 11, 11′ ausgebildet.

Schließlich zeigt die Fig. 14 eine Abdichtung, wie sie in ähnlicher Form als Küken 22 bei anderen Ventilen bereits bekannt ist, um Wärmeübergänge vom Ventil auf die Trägerhülse oder umgekehrt zu verhindern, damit schnellste Auslösungen im Gefahrenfalle erfolgen.

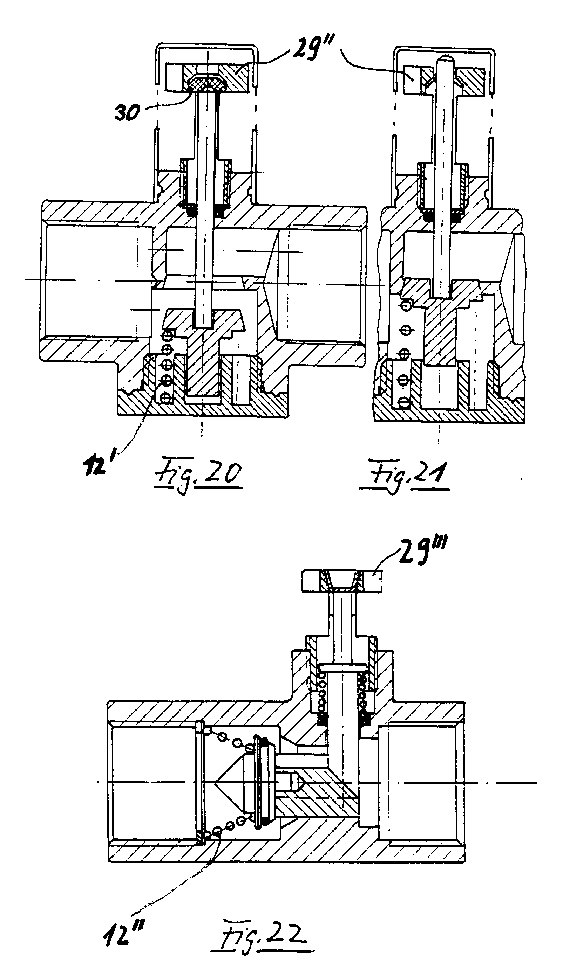

In den Fig. 15 bis 18 sind unterschiedliche Gestaltungen dargestellt, wie der Bereich um das Stützelement gestaltbar ist.

In Fig. 15 ist ein ortsfester Träger 15′ als Dreibein gestaltet, Fig. 19 zeigt die entsprechende Aufsicht auf diesen Träger 15′. Dabei ruhen die freien, mit einer starken Fase versehenen Enden der mit 26 bezeichneten Beine auf einer Platte 27 aus einem thermisch schlecht leitenden Material, um Wärmeverluste bzw. -übertragungen auf den Ventilkörper und somit auf das Rohrsystem zu verhindern.

Um weitere Wärmebeeinflussungen des Trägers 15 auf das Stützelement zu unterbinden, ist der obere Abschluß des Trägers als Kegel ausgebildet. Das Stützelement hat dadurch nur eine punktförmige Anlage zum Träger. Eine schnellere Aufnahme der im Brandfalle auftretenden Umgebungstemperatur wird dadurch bewirkt und trägt wesentlich zur schnelleren Auslösung der Sperrfunktion bei.

Der in Fig. 15 mit 13′ bezeichnete Sperrstopfen weist in dieser Ausgestaltung noch eine zentrische Bohrung 31 auf, die den Zutritt der Umgebungstemperatur erleichtert. Eine solche zentrische Innenbohrung 31 ist auch beim Ausführungsbeispiel gemäß Fig. 16 dargestellt.

In Fig. 16 kann beispielsweise der Träger 15˝ aus einem thermisch schlecht leitendem Material, z.B. aus Keramik, gefertigt sein, hier sind dann entsprechend große Durchbrechungen in den Beinen möglich, wie dies eingangs bereits beschrieben wurde, die Durchbrechungen sind hier mit 23′ bezeichnet.

In Fig. 17 ist die Möglichkeit dargestellt, den profilierten Kopf 13‴ des Stützelementes auf einer Wärmeleitscheibe 27′ aufruhen zu lassen, die zusätzlich mit Wärmeleitrippen (Thermorippen) 28 versehen ist, um ein schnelleres Einleiten der Wärme in diesem Bereich zu ermöglichen. Im in Fig. 17 dargestellten Beispiel ist der Kopf 13‴ als Wärmelotmutter ausgebildet, d.h. er kann beispielsweise aus dem Material des Wärmelotes gefertigt sein, in dem dann das Gewinde eingeschnitten ist.

Die Fig. 18 zeigt eine andere Ausführung einer Thermolotmutter, allgemein mit 29 bezeichnet, in deren Inneren der Stößel befestigt ist, dort mit 8′ bezeichnet. Wird die Thermolotmutter 29 warm, schmilzt im Inneren das Thermolot, mit 14′ bezeichnet, und gibt so den Stößel 8′ frei.

Schließlich zeigen die Fig. 20 bis 22 unterschiedliche Ausgestaltungen der Erfindung mit im Inneren des Ventilgehäuses liegender Betätigungsfeder 12′ bzw. 12˝. Hier wirkt die Wärme ebenfalls auf eine Wärmemutter 29˝ mit einem Thermoloteinsatz 30, der bei Hitzeeinwirkung schmilzt und den Durchtritt des federbelasteten Ventilstößels möglich macht, wie sich dies aus den Fig. 20 und 21 ergibt.

Die Fig. 22 zeigt eine sogenannte Umlenkausführung, wobei die Umlenkung über zwei im Winkel stehende, aneinandergleitende Stößel erfolgt, auch hier kann die Gestaltung durch eine Thermomutter (Wärmemutter) 29‴ erfolgen oder eine vergleichbare Gestaltung gewählt werden, worauf es hier nach der Erfindung nicht näher ankommt.

## Patentansprüche

1. Vorrichtung zum Absperren von Leitungen von temperaturempfindlichen Medien, insbesondere von Gasleitungen, mit einem von einer Feder (12, 12', 12'') belasteten Absperrelement (10), das mit einem in einem Ventilhörper (2, 4, 5) linear geführten Ventilstößel (8, 8') versehen ist, der von einem sich an einem ortfesten Träger (15, 15', 15'') abstützenden Stützelement (13, 13', 13''', 29'', 29''') in Oeffnungsstellung gehalten ist, wobei das Stützelement (13, 13', 13''', 29'', 29''') und der ortsfeste Träger (15, 15', 15'') der außerhalb des Ventilkörpers (2, 4, 5) herrschenden Temperatur ausgesetzt sind, wobei das Stützelement (13, 13', 13''', 29'', 29''') mit dem Ventilstößel (8, 8') über ein Thermolot fest verbunden ist, so daß bei Überschreiten einer bestimmten Temperatur das freie Ende des Ventilstößels (8, 8') freigegeben wird, so daß die Feder (12, 12', 12'') das Absperrelement (10) in Schließstellung treibt,
**dadurch gekennzeichnet**,
daß zur verbesserten Aufnahme der Umgebungstemperatur der ortsfeste Träger (15, 15', 15'') Durchbrechungen (23, 23') aufweist oder dem den Ventilstößel (8) haltenden Stützelement (13''') Thermorippen (28) zugeordnet sind, und daß die Thermolotverbindung und der Ventilstößel derart zueinander angeordnet sind, daß die durch das Thermolot (14) verbundenen Teile bzw. das Thermolot unmittelbar der Umgebungstemperatur außerhalb des Ventilkörpers ausgesetzt sind bzw. ist.

2. Vorrichtung zum Absperren von Leitungen von temperaturempfindlichen Medien, insbesondere von Gasleitungen, mit einem von einer Feder (12) belasteten Absperrelement (10), das mit einem in einem Ventilkörper (2, 4, 5) linear geführten Ventilstößel (8a) versehen ist, der von einem sich an einem ortfesten Träger (17) abstützenden Stützelement (15a) in Oeffnungsstellung gehalten ist, wobei das Stützelement (15a) und der ortsfeste Träger (17) der außerhalb des Ventilkörpers herrschenden Temperatur ausgesetzt sind, wobei das Stützelement (15a) den Ventilstößel (8a) über ein Thermolotverbindung derart hält, daß bei Überschreiten einer bestimmten Temperatur das freie Ende des Ventilstößels (8a) freigegeben wird, so daß die Feder (12) das Absperrelement (10) in Schließstellung treibt,
**dadurch gekennzeichnet**,
daß zur verbesserten Aufnahme der Umgebungstemperatur das als ein Stützhebel (15a) ausgebildete Stützelement an dem ortsfesten Träger (17) mittels eines Thermolotes (14a) befestigt ist, wobei am Ventilstößel (8a) ein Kragen (13a) vorhanden ist, der mit dem Stützhebel (15a) zusammenarbeitet, und daß die Thermolotverbindung und der Ventilstößel (8a) derart zueinander angeordnet sind, daß die durch das Thermolot (14a) verbundenen Teile unmittelbar der Umgebungstemperatur außerhalb des Ventilkörpers (2, 4, 5) ausgesetzt sind.

3. Vorrichtung nach Anspruch 1,
dadurch gekennzeichnet,
daß das Stützelement (13) als sich an dem als Stützhülse ausgebildeten ortsfesten Träger (15) abstützender in achsialer Richtung im Ventilstößel (8) mittels des Thermolotes (14) verlöteter Sperrstopfen oder als Thermolotmutter (13''') ausgebildet ist.

4. Vorrichtung nach Anspruch 1,
dadurch gekennzeichnet,
daß der ortsfeste Träger (15) als Drei-Bein-Träger ausgebildet ist.

5. Vorrichtung nach Anspruch 1,
dadurch gekennzeichnet,
daß das freie Ende des Stützelementes (13''') auf einer hochwärmeleitfähigen Scheibe (27') abgestützt ist, die mit den Thermorippen (28) versehen ist.

6. Vorrichtung nach einem der vorangehenden Ansprüche,
dadurch gekennzeichnet,
daß der Ventilstößel (8) mit einem Thermoloteinsatz (30) in einer Wärmemutter (29'', 29''') derart gehalten ist, daß nach Schmelzen des Thermoloteinsatzes der Ventilstößel durch die Kraft der beaufschlagenden Feder nach außen geschoben wird.

7. Vorrichtung zum Absperren von Leitungen von temperaturempfindlichen Medien, insbesondere von Gasleitungen, mit einem von einer Feder (12) belasteten Absperrelement (10), das mit einem in einem Ventilkörper (2b, 4b, 5b) linear geführten Ventilstößel (8b, 8c, 8c') versehen ist, der von einem sich an einem ortfesten Träger (25) abstützenden Stützelement (13b, 19, 19') in Oeffnungsstellung gehalten ist, wobei das Stützelement (13b, 19, 19') und der ortsfeste Träger (25) der außerhalb des Ventilkörpers herrschenden Temperatur ausgesetzt sind, wobei das Stützelement (13b, 19, 19') mit dem Ventilstößel (8b, 8c, 8c') derart verbunden ist, daß bei Überschreiten einer bestimmten Temperatur das freie Ende des Ventilstößels (8b, 8c, 8c') freigegeben wird, so daß die Feder (12) das Absperrelement (10) in Schließstellung treibt,
**dadurch gekennzeichnet**,
daß zur verbesserten Aufnahme der Umgebungstemperatur der ortsfeste Träger (25) Durchbrechungen (23b) aufweist, wobei dem ortsfesten Träger (25) Stützhebel (15b, 15b', 15c, 15c') zugeordnet sind, die mit einem am Ventilstößel (8b, 8c, 8c') angebrachten Kragen (13b) bzw. Haltestift (19, 19') als Stützelement zusammenarbeiten und die von einem Bimetallbügel (18, 18') aus der Sperrstellung in die den Ventilstößel (8b, 8c, 8c') freigebende Stellung dadurch bewegbar ist, daß der Bimetallbügel (18, 18') unmittelbar der Umgebungstemperatur außerhalb des Ventilkörpers ausgesetzt ist.

## Claims

1. Apparatus for shutting off conduits for temperature-sensitive media, in particular gas conduits, comprising a shut-off element (10) loaded by a spring (12, 12', 12'') and provided with a valve stem (8, 8') which is linearly guided in a valve body (2, 4, 5) and held in an open position by a support element (13, 13', 13''', 29'', 29''') which bears against a stationary carrier (15, 15', 15''), wherein the support element (13, 13', 13''', 29'', 29''') and the stationary carrier (15, 15', 15'') are exposed to the temperature obtaining outside the valve body (2, 4, 5), wherein the support element (13, 13', 13''', 29'', 29''') is fixedly connected to the valve stem (8, 8') by way of a thermal solder so that when a given temperature is exceeded the free end of the valve stem (8, 8') is released so that the spring (12, 12', 12'') drives the shut-off element (10) into the closing position, characterised in that for improved reception of the surrounding temperature the stationary carrier (15, 15', 15'') has through openings (23, 23') or thermal ribs (28) are associated with the support element (13''') holding the valve stem (8), and that the thermal solder connection and the valve stem are arranged relative to each other in such a way that the thermal solder or the parts connected by the thermal solder (14) is or are directly exposed to the surrounding temperature outside the valve body.

2. Apparatus for shutting off conduits for temperature-sensitive media, in particular gas conduits, comprising a shut-off element (10) loaded by a spring (12) and provided with a valve stem (8a) which is linearly guided in a valve body (2, 4, 5) and held in an open position by a support element (5a) which bears against a stationary carrier (17), wherein the support element (15a) and the stationary carrier (17) are exposed to the temperature obtaining outside the valve body, wherein the support element (15a) holds the valve stem (8a) by way of a thermal solder connection in such a way that when a given temperature is exceeded the free end of the valve stem (8a) is released so that the spring (12) drives the shut-off element (10) into the closing position, characterised in that for improved reception of the surrounding temperature the support element which is in the form of a support lever (15a) is fixed to the stationary carrier (17) by means of a thermal solder (14a), wherein provided on the valve stem (8a) is a collar (13a) which co-operates with the support lever (15a), and that the thermal solder connection and the valve stem (8a) are arranged relative to each other in such a way that the parts connected by the thermal solder (14a) are directly exposed to the surrounding temperature outside the valve body (2, 4, 5).

3. Apparatus according to claim 1 characterised in that the support element (13) is in the form of a thermal solder nut (13''') or a locking plug which is soldered by means of the thermal solder (14) in the valve stem (8) in the axial direction and which is supported against the stationary carrier (15) which is in the form of a support sleeve.

4. Apparatus according to claim 1 characterised in that the stationary carrier (15) is in the form of a three-legged carrier.

5. Apparatus according to claim 1 characterised in that the free end of the support element (13''') is supported on a disc (27') which is highly thermally conductive and which is provided with the thermal ribs (28).

6. Apparatus according to one of the preceding claims characterised in that the valve stem (8) is held with a thermal solder insert (30) in a heat nut (29'', 29''') in such a way that after fusion of the thermal solder insert the valve stem is pushed outwardly by the force of the spring acting thereon.

7. Apparatus for shutting off conduits for temperature-sensitive media, in particular gas conduits, comprising a shut-off element (10) loaded by a spring (12) and provided with a valve stem (8b, 8c, 8c') which is linearly guided in a valve body (2b, 4b, 5b) and held in the open position by a support element (13b, 19, 19') which bears against a stationary carrier (25), wherein the support element (13b, 19, 19') and the stationary carrier (25) are exposed to the temperature obtaining outside the valve body, wherein the support element (13b, 19, 19') is connected to the valve stem (8b, 8c, 8c') in such a way that when a given temperature is exceeded the free end of the valve stem (8b, 8c, 8c') is released so that the spring (12) drives the shut-off element (10) into the closing position, characterised in that for improved reception of the surrounding temperature the stationary carrier (25) has through openings (23b), wherein associated with the stationary carrier (25) are support levers (15b, 15b', 15c, 15c') co-operating with a holding pin (19, 19') or collar (13b) disposed on the valve stem (8b, 8c, 8c') as the support element, and is movable by a bimetal strip (18, 18') out of the locking position into the position of releasing the valve stem (8b, 8c, 8c'), by virtue of the bimetal strip (18, 18') being directly exposed to the surrounding temperature outside the valve body.

## Revendications

1. Dispositif pour fermer des conduites de milieux sensibles à la température, en particulier des conduites de gaz, avec un obturateur (10) sollicité par un ressort (12, 12', 12'') et pourvu d'un poussoir de vanne (8, 8'), à guidage linéaire dans un corps de vanne (2, 4, 5), et maintenu en position d'ouverture par un élément d'appui (13, 13', 13'', 29'', 29''') s'appuyant sur un support (15, 15', 15'') localement fixe, l'élément d'appui (13, 13', 13'', 29'', 29''') et le support (15, 15', 15'') localement fixe étant exposés à la température régnant à l'extérieur du corps de vanne (2, 4, 5), l'élément d'appui (13, 13', 13'', 29'', 29''') étant relié rigidement au poussoir de vanne (8, 8') par l'intermédiaire d'une brasure sensible à la température, de manière qu'en cas de dépassement d'une température déterminée, l'extrémité libre du poussoir de vanne (8, 8') soit libérée, de sorte que le ressort (12, 12', 12'') place l'obturateur (10) en position de fermeture, caractérisé en ce que, pour améliorer la mise à la température ambiante, le support (15, 15', 15'') localement fixe présente des passages (23, 23'), ou bien des nervures thermiques (28) sont associées à l'élément d'appui (13''') maintenant le poussoir de vanne (8), et en ce que la liaison par brasure sensible à la température et le poussoir de vanne sont disposés l'un par rapport à l'autre de manière que les parties reliées par l'intermédiaire de la brasure sensible à la température (14), ou la brasure sensible à la température sont, respectivement, est exposée(s) directement à la température ambiante régnant à l'extérieur du corps de vanne.

2. Dispositif pour former des conduites de milieux sensibles à la température, en particulier de conduites de gaz, avec un obturateur (10) sollicité par un ressort (12), l'obturateur étant pourvu d'un poussoir de vanne (8a) à guidage linéaire dans un corps de vanne (2, 4, 5) et maintenu en position d'ouverture par un élément d'appui (15a), s'appuyant sur un support localement fixe (17), l'élément d'appui (15a) et le support (17) localement fixe étant exposés à la température régnant à l'extérieur du corps de vaine , l'élément d'appui (15a) maintenant le poussoir de vanne (8a) par l'intermédiaire d'une liaison à brasure sensible à la température, de manière qu'en cas de dépassement d'une température déterminée, l'extrémité libre du poussoir de vanne (8a) soit libéré, de sorte que le ressort place l'obturateur (10) en position de fermeture, caractérisé en ce que, pour améliorer la mise à la température ambiante, l'élément d'appui réalisé sous forme de levier d'appui (15a) est fixé sur le support (17) localement fixe au moyen d'une brasure sensible à la température (14a), une collerette (13a) étant réalisée sur le poussoir de vanne (8a) et coopérant avec le levier d'appui (15a), et en ce que la liaison par brasure sensible à la température et le poussoir de vanne (8a) sont disposés l'un par rapport à l'autre de manière que les parties reliées par la brasure sensible à la température (14a) soient exposées directement à la température ambiante régnant à l'extérieur du corps de vanne (2, 4, 5).

3. Dispositif selon la revendication 1, caractérisé en ce que l'élément d'appui (13) est réalisé sous forme d'écrou en brasure (13''') ou de bouchon d'isolement, brasé dans le poussoir de vanne (8) au moyen de la brasure sensible à la température (14), et prenant appui en direction axiale sur le support (15) localement fixe réalisé sous forme de douille d'appui.

4. Dispositif selon la revendication 1, caractérisé en ce que le support (15) localement fixe est réalisé sous forme de support à trois pieds.

5. Dispositif selon la revendication 1, caractérisé en ce que l'extrémité libre de l'élément d'appui (13''') prend appui sur une rondelle (27') présentant une conductibilité thermique élevée, pourvue des nervures thermiques (28).

6. Dispositif selon l'une des revendications précédentes, caractérisé en ce que le poussoir de vanne (8) est maintenu dans un écrou thermique (29'', 29'''), à l'aide d'une garniture à brasure sensible à la température (30), de manière que, après fusion de la garniture à brasure sensible à la température, le poussoir de vanne soit poussé vers l'extérieur sous la force du ressort qui le sollicite.

7. Dispositif pour fermer des conduites de milieux sensibles à la température, en particulier de conduites de gaz, avec un obturateur (10) sollicité par un ressort (12) et pourvu d'un poussoir de vanne (8b, 8c, 8c') à guidage linéaire dans un corps de vanne (2b, 4b, 5b) et maintenu en position d'ouverture par un élément d'appui (13b, 19, 19') prenant appui sur un support (25) localement fixe, l'élément d'appui (13b, 19, 19') et le support (25) localement fixe étant exposés à la température régnant à l'extérieur du corps de vanne , l'élément d'appui (13b, 19, 19') étant relié au poussoir de vanne (8b, 8c, 8c'), de manière qu'en cas de dépassement d'une température déterminée l'extrémité libre du poussoir de vanne (8b, 8c, 8c') soit libérée, de sorte que le ressort (12) place l'obturateur (10) en position de fermeture, caractérisé en ce que, pour améliorer la mise à la température ambiante, le support (25) localement fixe présente des passages (23b), des leviers d'appui (15b, 15b', 15c, 15c') étant associés au support (25) localement fixe et coopérant, à titre d'éléments d'appui, avec une collerette (13b), ou une tige de maintien (19, 19') montée sur le poussoir de vanne (8b, 8c, 8c'), et pouvant être déplacés par un étrier bi-métallique (18, 18'), depuis la position de blocage dans la position de libération du poussoir de vanne (8b, 8c, 8c'), par le fait que l'étrier bi-métallique (18, 18') est exposé directement à la température ambiante régnant à l'extérieur du corps de vanne.
